# EUROPEAN PATENT APPLICATION

(11) **EP 1 326 244 A2**
(43) Date of publication of application: **09.07.2003**
(21) Application number: 02257100.4
(22) Date of filing: 14.10.2002
(51) Int. Cl.: G11B 19/02, G11B 20/00, G11B 20/10

(54) **Apparatus and method of reproducing a recording medium, and program for reproducing a recording medium**

(30) Priority: 28.12.2001 JP 2001401692
(71) Applicant: Pioneer Corporation, Meguro-ku, Tokyo (JP)
(72) Inventor: Nonaka, Yoshiya, c/o Pioneer Corporation, Kawagoe-shi, Saitama (JP)
(74) Representative: Haley, Stephen

(57) **Abstract**

When a microcomputer 24 recognizes a CD-ROM, path data of MP3 files of a minimum required amount are recorded from a path table into a memory 23, and corresponding MP3 files are read out from the CD-ROM to be reproduced. When the recorded amount of a buffer memory 27 reaches a predetermined amount, writing into the buffer memory 27 is stopped, and remaining path data which is not yet recorded are recorded into the memory 23. The time period required for starting reproduction of MP3 data can be shortened, and the seek velocity of a pickup 16 can be improved.

## Description

The present invention relates to an apparatus for reproducing a recording medium such as a CD-ROM (Compact Disk-Read Only Memory) on which data that are compressed in accordance with, for example, the MP3 (MPEG (Moving Picture Experts Group)-1 Audio Layer-3) standard are recorded, a method of reproducing such a recording medium, and a program for reproducing such a recording medium.

Conventionally, a reproducing apparatus which reads out and reproduces musical data recorded on a CD-DA (Compact Disk-Digital Audio) serving as a recording medium that is a so-called music CD is widely used. In a CD-DA, musical data are recorded as sound of the PCM (Pulse Code Modulation) format having a part of a WAVE file. In a PCM wave file, musical data which are to be reproduced for one minute require a capacity of about 10 megabytes, or a relatively large capacity is necessary.

Consequently, there is a technique in which data such as musical data are compressed without substantially deteriorating the sound quality and then recorded on a recording medium, so that data of an amount which is as large as possible can be recorded in a limited recording area. As a method of compressing data, for example, the MP3 (MPEG (Moving Picture Experts Group)-1 Audio Layer-3) system is usually employed. In the MP3 system, the above-mentioned wave file can be compressed to about one tenth of the original capacity. When this system is employed, simply speaking, it is possible to record data the capacity of which is about ten times musical data recorded on a CD-DA.

As a recording medium on which data that are compressed by the MP3 system (hereinafter, such data are referred to as MP3 data) are to be recorded, for example, a CD-ROM (Compact Disk-Read Only Memory) is used. A CD-ROM has a disk structure in which the ISO 9660 standard is employed and a plurality of directories or files are hierarchically correlated with one another. In each of the directories, MP3 data in one data unit (in the case of musical data, one music piece) are recorded in the file format.

In the disk structure according to the ISO 9660 standard, a path table is disposed in which data indicating a starting position of recording of a file recorded in a director on the CD-ROM are recorded (hereinafter, such data are referred to as path data). When MP3 data are to be reproduced, the path data recorded in the path table are read out to find the file of the MP3 data (hereinafter, such a file is referred to as MP3 file), and then the MP3 data are read out.

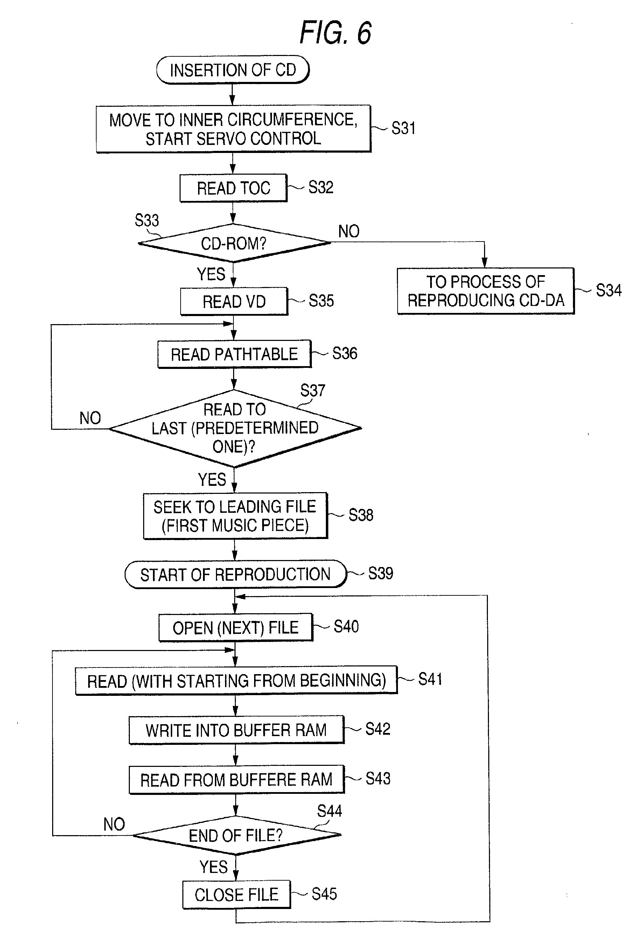

Fig. 6 is a flowchart showing a control of reproducing MP3 data in a conventional apparatus for reproducing a CD-ROM on which MP3 data are recorded. First, a recording medium such as a CD is inserted and loaded at a predetermined reproduction position. Then, a reading beam of a pickup is positioned on the innermost circumference of the recording medium, and a spindle servo control is started to rotate the recording medium at a constant linear velocity (step S31).

Next, information of the TOC (Table of Contents) recorded in the innermost circumference is read out (step S32), and it is judged whether the loaded recording medium is a CD-ROM or not (step S33). If it is judged that the medium is a CD-DA, a process of reproducing musical data recorded on the CD-DA is performed (step S34).

If it is judged in step S33 that the medium is a CD-ROM, the CD-ROM is recognized to have the disk structure according to the ISO 9660 standard (step S35). The disk structure according to the ISO 9660 standard can be confirmed by reading data recorded in a VD (Volume Descriptor) by the pickup. In the VD, basic information of the CD-ROM, and data such as the address of an index for enabling a computer to access are recorded. Also data (Standard Identifier) indicating the kind of the disk structure are recorded in the VD. The disk structure according to the ISO 9660 standard can be confirmed by reading the data.

After the loaded CD-ROM is recognized to have the disk structure according to the ISO 9660 standard, the reading beam of the pickup is positioned on the path table to read the path data (step S36). In this step, only the path data indicating starting positions of recording of MP3 files are read out. In a CD-ROM in which the ISO 9660 standard is employed, also various data which are available in a computer are recorded in addition to MP3 data.

When the path data are to be read out, only path data of files to which an extension for identifying MP3 data is attached are searched and extracted, and then subjected to predetermined signal processing. The resulting path data are recorded into a memory. It is then judged whether all (about 253 to 400) path data of MP3 files recorded in the path table of the CD-ROM are recorded into the memory or not (step S37). If the recording is not completed, the reading of path data and the recording of the data into the memory are continued.

If it is judged in step S37 that all path data of MP3 files are recorded into the memory, the first MP3 file (in the case where the MP3 data are musical data, an MP3 file of the first music piece) recorded on the CD-ROM is accessed on the basis of the path data recorded in the memory. Namely, the reading beam of the pickup is positioned at the starting position of recording of the first MP3 file (step S38), and a reproducing process is then started (step S39).

The MP3 data are reproduced in the following manner. First, the MP3 file on which the reading beam of the pickup is positioned is opened (step S40), and a reading process is performed with starting from a leading portion of the MP3 data (step S41). Predetermined signal processing such as error correction is applied to the read out MP3 data, and the resulting MP3 data are written into a memory such as a buffer RAM (step S42). The written MP3 data are read out from the memory such as a buffer RAM, and a predetermined expanding process is applied to the MP3 data.

The resulting data are supplied to a loudspeaker to be reproduced.

In the reproduction of MP3 data, the following method is employed. The predetermined signal processing is applied to the data in the compressed state, and the data are then recorded into the memory such as a buffer RAM. Thereafter, the MP3 data which remain to be compressed are read out from the memory such as a buffer RAM, and then subjected to the expanding process to be reproduced.

It is judged whether the MP3 data that are being reproduced are read out to their end or not (step S44). If the data are not read out to the end, the reading process is continued. If it is judged in step S44 that the MP3 data are read out to their end, the MP3 file is closed (step S45), and, on the basis of the path data recorded in the memory, the reading beam of the pickup is positioned at the starting position of recording of the MP3 file that is to be subsequently reproduced, and the processes of steps S40 to S45 are repeated.

As described above, in the conventional process of reproducing MP3 data, all path data indicating the starting positions of recording of MP3 files which are recorded on a CD-ROM are once recorded into a memory, and, on the basis of the path data recorded in the memory, the MP3 data are then reproduced. According to the configuration, a process of positioning a reading beam of a pickup on a path table each time when MP3 data are to be read out can be omitted, and therefore an advantage that the seek velocity of the pickup is improved is attained.

In the conventional above-described process of reproducing MP3 data, the advantage that the seek velocity of the pickup is improved is attained, but there is a disadvantage that a long time period is required between loading of a CD-ROM and reproduction (a sound of a music or the like is output from a loudspeaker) of the first MP3 data. Specifically, a process is performed in which all path data which are recorded in a path table of a CD-ROM, and which indicate the starting positions of recording of MP3 files are searched out, predetermined signal processing is applied to the path data, and the path data are then recorded into a memory. Therefore, the first MP3 data are reproduced after a time period of about 40 seconds has elapsed. Therefore, the user has an unnecessary sense of mistrust, and the conventional art is not convenient.

When a process is performed in which path data of MP3 files are not recorded into a memory and the path data recorded on a CD-ROM are sequentially read out to cause a pickup to conduct a seeking operation, the above-mentioned time period can be shortened. In this case, however, there arises a disadvantage that the seek velocity of the pickup is reduced as described above.

The invention is conducted in view of these problems. It is an object of the invention to provide an apparatus and method of reproducing a recording medium in which both shortening of the time period between loading of a recording medium and starting of reproduction of data such as musical data, and improvement of the seek velocity of a pickup can be attained, and a program for reproducing a recording medium.
(1) According to the first aspect of the invention, an apparatus for reproducing a recording medium in which the apparatus comprises: a reader which reads out data recorded on a recording medium, and management data indicating starting positions of recording of the data on the recording medium; a data recorder in which the data that are read out by the reader are recorded; and a management data recorder in which the management data that are read out by the reader are recorded, when the data recorded on the recording medium are to be reproduced, the management data of a minimum required amount are read out and then recorded in the management data recorder, and, on the basis of the recorded management data, the data recorded on the recording medium are read out and recorded in the data recorder, and the data recorded in the data recorder are read out and then reproduced, wherein the apparatus further comprises: a data amount detector which detects that a recorded amount of the data recorder reaches a predetermined amount; and a controller which, when the recorded amount reaches the predetermined amount, stops recording of data into the data recorder, and records remaining management data on the recording medium that are not recorded in the management data recorder, into the management data recorder.
(2) According to the second aspect of the invention, in the apparatus for reproducing a recording medium of (1), when the recorded amount in the data recorder becomes equal to or smaller than the predetermined amount after stopping of recording of data into the data recorder, the controller restarts recording of data into the data recorder.
(3) According to the third aspect of the invention, in the apparatus for reproducing a recording medium of (1) or (2), recording of remaining management data into the management data recorder is conducted during reproducing of the data recorded in the data recorder.
(4) According to the forth aspect of the invention, in the apparatus for reproducing a recording medium of any one of the first through third aspects, the data are data which are compressed by a predetermined system, and the data recorded in the data recorder are reproduced with being subjected to a predetermined expanding process.
(5) According to the fifth aspect of the invention, in the apparatus for reproducing a recording medium of any one of the first through forth aspects, the controller records predetermined management data which is first read by the reader, into the management data recorder, causes the reader to continuously read out data corresponding to the management data, and the data recorder to record the data, and conducts a process of reproducing the data.
(6) According to the sixth aspect of the invention, in a method of reproducing a recording medium in which data recorded on a recording medium, and management data indicating starting positions of recording of the data on the recording medium are recorded in a recorder, and the recorded data are reproduced, the method comprises the steps of: reading out the management data of a minimum required amount when the data recorded on the recording medium are to be reproduced; recording the read out management data; reading out the data recorded on the recording medium on the basis of the recorded management data; and recording the read out data, and performing a process of reproducing the recorded data, and the method further comprises the steps of: detecting that a recorded amount of the data recorder reaches a predetermined amount; and when the recorded amount reaches the predetermined amount, stopping recording of data, and recording remaining management data on the recording medium that are not recorded.
(7) According to the seventh aspect of the invention, the invention provides a program for reproducing a recording medium to cause a computer to perform a method of reproducing a recording medium according to the sixth aspect.

In the Drawings;
Fig. 1 is a diagram schematically showing the structure of a CD-ROM in an embodiment of the invention.
Fig. 2 is a diagram schematically showing contents of a path table in the embodiment.
Fig. 3 is a diagram schematically showing the configuration of the path table in the embodiment.
Fig. 4 is a block diagram schematically showing the configuration of a reproducing apparatus of the embodiment.
Fig. 5 is a flowchart showing the operation of the reproducing apparatus of the embodiment.
Fig. 6 is a flowchart showing the operation of a reproducing apparatus of a conventional art example.

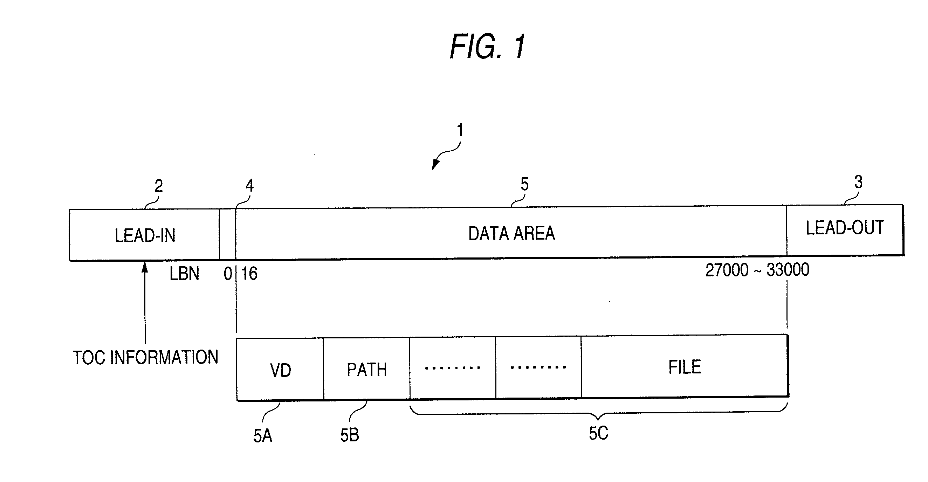

Hereinafter, an embodiment of the invention will be described with reference to Figs. 1 to 5. In the embodiment, an apparatus for reproducing a recording medium such as a CD-ROM (Compact Disk-Read Only Memory) on which data that are compressed in accordance with, for example, the MP3 (MPEG (Moving Picture Experts Group)-1 Audio Layer-3) standard are recorded will be exemplarily described. The recording medium to be reproduced is not restricted to a CD-ROM, and the invention may be applied to various kinds of recording media.

Fig. 1 is a diagram schematically showing the structure of a CD-ROM 1 serving as a recording medium which is to be used in the reproducing apparatus of the embodiment. The CD-ROM 1 is formed into a disk-like shape in which a center hole that is approximately circular, and that is not shown is opened in a substantially center portion. One face of the CD-ROM is used as an information recording surface. As shown in Fig. 1, a lead-in area 2 into which TOC (Table Of Contents) information serving as a data file is recorded is disposed in the innermost circumference of the information recording surface. A lead-out area 3 into which a lead-out code indicating the end of the CD-ROM 1 is recorded is disposed in the outermost circumference of the information recording surface. When the lead-in area 2 and the lead-out area 3 are detected, the CD-ROM 1 can be automatically reproduced.
The TOC information of the lead-in area 2 includes identification data indicating that the medium is a CD-ROM.

LBNs (Logical Block Numbers) starting from 0 are allocated in the unit of, for example, 2 kB (kilobytes) to regions between the outer circumferential side of the CD-ROM 1 in the lead-in area 2 and the inner circumferential side of the CD-ROM 1 in the lead-out area 3. A system area 4 which is defined in the ISO 9660 standard is allocated to LBNs 0 to 15, a data area 5 is allocated to LBNs 16 to 27000-33000.

In the data area 5, a VD (Volume Descriptor) 5A is allocated to a region starting from LBN 16. In the VD 5A, basic information of the CD-ROM, and data such as the address of an index for enabling a computer to access are recorded. In a PVD (Primary Volume Descriptor) of the VD 5A, data such as the address of a path table 5B which will be described later, and data (Standard Identifier) indicating the file format, i.e., that the ISO 9660 standard is employed in the disk structure are recorded.

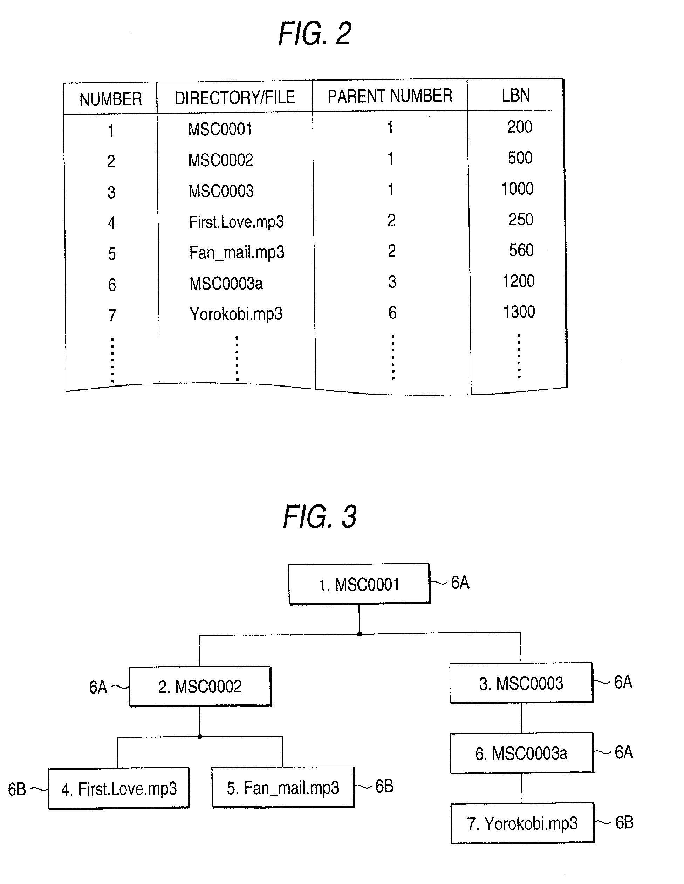

The path table 5B is allocated to a region in the outer circumferential side of the CD-ROM 1 in the VD 5A. Fig. 2 schematically shows the data structure of the path table 5B.

As shown in the figure, in the path table 5B, data indicating the directory name or the file name, and data (for example, LBNs) correspondingly indicating starting positions of recording of the data on the CD-ROM 1 are recorded in the form of a list. The parent numbers indicate relationships by which directories or files are correlated with directories or files. The numbers correspond to the numbers of the "NO." column.

In the file name "Fan_mail.mp3" at NO. 5, for example, the parent number is "2", and LBN is "560". This means that the file is correlated with the directory name "MSC0002" at NO. 2, and the file is recorded in a region starting from LBN 560. Hereinafter, description will be made while each set of data in one row in the path table 5B is referred to as path data.

A file region 5C is allocated to a region in the outer circumferential side of the CD-ROM 1 in the path table 5B. Fig. 3 schematically shows the data structure of the file region 5C.

As shown in the figure, in the file region 5C, directories 6A and files 6B are connected to one another in a tree-like form. The directories 6A and the files 6B which are shown in the figure refer to the directories and the files which are shown in Fig. 2. For example, the above-mentioned file name "Fan_mail.mp3" at NO. 5 in Fig. 2 dangles from the directory "MSC0002" at NO. 2. This means that the file "Fan_mail.mp3" is a file recorded (a file correlated with) in the directory "MSC0002". Since the directory "MSC0002" dangles from the directory "MSC0001", the file "Fan_mail.mp3" can be found by tracing the directory "MSC0001" to "MSC0002".

The file "Fan_mail.mp3" is a file which is obtained by recording MP3 data in the file format into the directory "MSC0002". The fact that the file is a file of MP3 data (hereinafter, such a file is referred to as MP3 file) can be known from the extension attached to the file name.

In the file name "Fan_mail.mp3", for example, the extension is ".mp3". Therefore, the file is an MP3 file. In a file other than an MP3 file, such as a file of EXCEL (registered trademark) or that of WORD (registered trademark), the extension is ".xls" or ".doc". Therefore, an MP3 file can be identified by checking the extension.

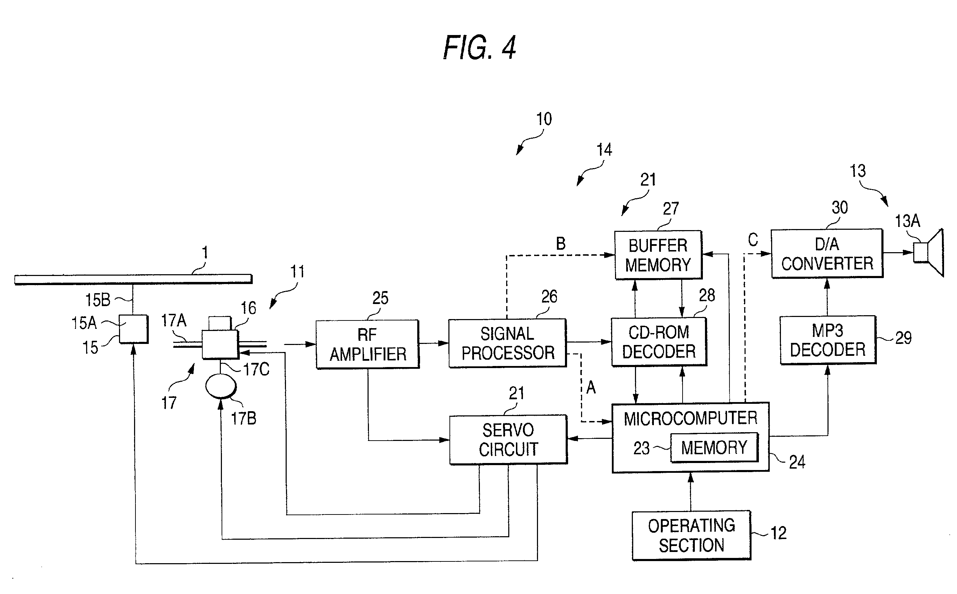

Next, the configuration of an apparatus for reproducing the thus structured CD-ROM 1 will be described with reference to the block diagram of Fig. 4.

As shown in Fig. 4, the reproducing apparatus 10 is configured by: a mechanical section 11 for reading the MP3 data recorded on the CD-ROM 1; an RF amplifier 25; a servo circuit 21; a signal processor 26 which performs signal processing such as error correction; a buffer memory 27; a CD-ROM decoder 28; a microcomputer 24 which governs the whole control of the reproducing apparatus 10; an MP3 decoder 29; a D/A converter 30; a loudspeaker 13; and an operating section 12.

The mechanical section 11 comprises: a rotating section 15 which rotates the CD-ROM 1 loaded at a predetermined reproduction position, at a constant linear velocity; and a pickup moving section 17 which moves a pickup 16 for reading data recorded in the information recording surface of the CD-ROM 1, in parallel with the information recording surface and in a radial direction.

The rotating section 15 comprises: a turntable (not shown) which is to be engaged with the center hole of the CD-ROM 1 to load the CD-ROM at the predetermined reproduction position, thereby enabling the CD-ROM 1 to be rotated; a clamper (not shown) which cooperates with the turntable to clamp the CD-ROM 1; and a spindle motor 15A which rotates the CD-ROM 1 at a constant linear velocity on the basis of a signal supplied from the servo circuit 21. An output shaft 15B is attached to the spindle motor 15A. A tip end portion of the output shaft 15B is coupled with the turntable, so that the driving force of the spindle motor 15A is transmitted to the turntable via the output shaft 15B to rotate the CD-ROM 1 at the constant linear velocity.

The pickup 16 comprises: a light source (not shown) which reflects a reading beam; an objective lens (not shown) which converges the reading beam from the light source to irradiate the information recording surface of the CD-ROM 1; and an optical detector (not shown) which receives a reflected beam from the information recording surface of the CD-ROM 1 and converts the beam into an electric signal. The electric signal which is obtained by the photoelectric conversion in the optical detector is supplied to the RF amplifier 25. The pickup 16 further comprises a focus actuator (not shown) and a tracking actuator (not shown) which are used for driving the objective lens in the focusing and tracking directions. On the basis of the signal supplied from the servo circuit 21, the focus actuator and the tracking actuator are driven to adjust the reading beam reflected from the light source in the focal length with respect to the information recording surface, and also in the focal position on the information recording surface.

The pickup moving section 17 comprises: a guide shaft 17A which movably supports the pickup 16, and which elongates in a radial direction of the CD-ROM 1 loaded at the predetermined reproduction position; and a carriage motor 17B which rotates the guide shaft 17A. A helical engaging groove is formed on the whole of the guide shaft 17A, and the pickup 16 is slidably engaged with a part of the engaging groove. On the basis of the signal supplied from the servo circuit 21, the carriage motor 17B is driven, and the driving force of the motor is transmitted to the guide shaft 17A. The guide shaft 17A is rotated in a predetermined direction by the driving force to move the pickup 16 in a radial direction of the CD-ROM 1.

The RF amplifier 25 amplifies the electric signal supplied from the pickup 16 and applies a predetermined equalizing process on the amplified signal to produce an RF signal. The RF signal is supplied to the signal processor 26. On the basis of the signal supplied from the pickup 16, the RF amplifier 25 produces a focus error signal and a tracking error signal, and supplies the signals to the servo circuit 21.

The servo circuit 21 outputs signals for driving the focus actuator and the tracking actuator, based on the focus error signal and the tracking error signal supplied from the RF amplifier 25, and also signals for respectively controlling the rotation numbers of the carriage motor 17B and the spindle motor 15A in accordance with the control of the microcomputer 24.

The signal processor 26 applies signal processing such as an error correction process and an EFM (Eight to Fourteen Modulation) demodulation process on the RF signal supplied from the RF amplifier 25, i.e., the MP3 data, the path data, and the like, and supplies the resulting signals to the CD-ROM decoder 28. In the error correction process, a data error correcting operation is conducted by applying Reed-Solomon codes to each of two kinds of error, or the frequency and length of a burst error due to a scratch or dirt on the CD-ROM 1, or disturbance of the servo control.

In the EFM demodulation process, a process of modulating a signal to which a parity for error correction is added by the error correction process is conducted. Specifically, on the basis of a signal in which data of 32 symbols and a parity is output during one frame, for example, 8 bits are converted into a pattern of 14 bits for each of the symbols. The low-frequency components are reduced to enhance the degree of freedom, and a stable servo control is realized by the control of the microcomputer 24 based on the demodulation process.

The CD-ROM decoder 28 again conducts the same signal processing as that of the signal processor 26, on the MP3 data, the path data, and the like which are supplied from the signal processor 26, and which have undergone the signal processing. In the embodiment, description is made on reproduction of MP3 data which are musical data. In the CD-ROM 1, not only musical data, but also image data in which importance is placed on continuity, and computer data which are to be processed in a computer can be recorded.

On the assumption that the signal processing in the signal processor 26 cannot be normally conducted because of vibration or the like, the same signal processing is again applied to the data which have undergone the signal processing in the signal processor 26, whereby continuity of the data can be ensured. The MP3 data on which the signal processing is again performed are read out from the buffer memory 27 in accordance with the control of the microcomputer 24, and then supplied to the microcomputer 24.

The buffer memory 27 is configured by, for example, a FIFO (First-In-First-Out) buffer register. The MP3 data which are written by the CD-ROM decoder 28 are recorded in the writing sequence, and the MP3 data are read out by the CD-ROM decoder 28 in the sequence at which the data are recorded into the buffer memory 27. Then, MP3 data are newly written and recorded into free regions which are obtained as a result of the reading.

On the basis of a signal supplied from the operating section 12, the microcomputer 24 controls the servo circuit 21 to conduct various operations such as an operation of reproducing the CD-ROM 1, a search (seek) operation, and a pose operation. Furthermore, the microcomputer controls the CD-ROM decoder 28 so as to read out MP3 data from the buffer memory 27, and always monitors the recorded amount of MP3 data which are recorded in the buffer memory 27.

When the recorded amount of the buffer memory 27 reaches a predetermined amount, the servo circuit 21 is controlled-so as to position the reading beam of the pickup 16 on the path table 5B, and stop the operation of reading MP3 data. When the buffer memory 27 is emptied, the CD-ROM decoder 28 is controlled so as to stop the operation of reading MP3 data from the buffer memory 27.

The microcomputer 24 has a built-in memory 23 such as a RAM (Random Access Memory). The TOC information supplied from the CD-ROM decoder 28, the data of the PVD in the VD 5A, and the path data are recorded into the built-in memory 23. On the basis of the path data recorded in the built-in memory 23, the servo circuit 21 is controlled so that the reading beam of the pickup 16 is positioned by the pickup moving section 17, at the starting position of recording of the MP3 file which is recorded on the CD-ROM 1.

The MP3 decoder 29 expands the MP3 data supplied from the microcomputer 24, and then outputs the expanded data to the D/A converter 30. The data are converted into analog data by the D/A converter 30, and then supplied to the loudspeaker 13. The loudspeaker 13 outputs the analog data supplied from the D/A converter 30, as a sound.

The operating section 12 comprises operation buttons (not shown) which are used for giving various instructions such as instructions of conducting a reproducing or searching operation on the CD-ROM 1. A signal corresponding to an operation button which is operated is supplied to the microcomputer 24.

In the thus configured reproducing apparatus 10, the MP3 data recorded on the CD-ROM 1 are reproduced in the following manner.

First, when a signal indicative of instructions of conducting a reproducing operation on the CD-ROM 1 is output from the operating section 12, the servo circuit 21 outputs signals for respectively controlling the rotation numbers to the carriage motor 17B and the spindle motor 15A.
Based on the signal, the carriage motor 17B is rotated to position the reading beam of the pickup 16 into the lead-in area 2 of the CD-ROM 1. The spindle motor 15A is rotated on the basis of the signal from the servo circuit 21 so as to rotate the CD-ROM 1 at the constant linear velocity.

Then, the pickup 16 reads the TOC information, and it is judged that the recording medium to be reproduced is a CD-ROM. In the data area 5, the data of the PVD in the VD 5A and the path data of the path table 5B are read out. The data are recorded into the built-in memory 23 of the microcomputer 24 via the RF amplifier 25, the signal processor 26, and the CD-ROM decoder 28.

Next, on the basis of the path data, the servo circuit 21 controls the driving of the carriage motor 17B so as to position the reading beam of the pickup 16 at the starting position of recording of the MP3 file in the file region 5C, thereby reading the MP3 file. MP3 data in the read MP3 file are written into the buffer memory 27 via the RF amplifier 25, the signal processor 26, and the CD-ROM decoder 28. The MP3 data which is written into the buffer memory 27 are read by the CD-ROM decoder 28 under the control of the microcomputer 24, and then supplied to the MP3 decoder 29 via the microcomputer 24. The data are then subjected to the expanding process in the MP3 decoder 29, and the expanded data are supplied to the D/A converter 30.

The writing of the MP3 data recorded on the CD-ROM 1 into the buffer memory 27, and the recording of the path data into the built-in memory 23 are conducted in parallel with the reading out of the MP3 data recorded in the buffer memory 27. The microcomputer 24 can independently control each of the operations.

Referring to the block diagram of Fig. 4, musical data recorded on a CD-DA (Compact Disk-Digital Audio) are reproduced in the following manner.

First, when a signal indicative of instructions of conducting a reproducing operation on the CD-DA is output from the operating section 12, the servo circuit 21 drivingly controls the rotation number of the carriage motor 17B to position the reading beam of the pickup 16 into the lead-in area of the CD-DA, and drivingly controls the rotation number of the spindle motor 15A so as to rotate the CD-DA at the constant linear velocity.

Then, the pickup 16 reads the TOC information, and it is judged that the recording medium to be reproduced is a CD-DA. Also read information such as a track number (music number) and the reproduction time period of each track number are recorded into the built-in memory 23 of the microcomputer 24 via the RF amplifier 25 and the signal processor 26 (in the route indicated by the arrow A).

Next, on the basis of the TOC information, the servo circuit 21 controls the driving of the carriage motor 17B so as to position the reading beam of the pickup 16 at the starting position of musical data, thereby reading the musical data. The read out musical data are written into the buffer memory 27 via the RF amplifier 25 and the signal processor 26 (in the route indicated by the arrow B).

The musical data which is written into the buffer memory 27 are read by the microcomputer 24, and then supplied to the D/A converter 30 via the microcomputer 24 (in the route indicated by the arrow C). The musical data are analog-converted in the D/A converter 30, and then output as a sound from the loudspeaker 13.

As described above, the MP3 data recorded on the CD-ROM 1 are compressed to about one tenth or a smaller rate as compared with the musical data recorded on the CD-DA. Therefore, the speed of writing the MP3 data into the buffer memory 27 is higher than that of writing the musical data recorded on the CD-DA. Since the MP3 data written in the buffer memory 27 are subjected to the expanding process in the MP3 decoder 29, the speed of reading out the data from the buffer memory 27 and outputting as a sound from the loudspeaker 13 is lower than that of reading out the musical data of the CD-DA recorded in the buffer memory 27, as they are from the buffer memory 27 and outputting as a sound from the loudspeaker 13.

When the speed of writing the musical data recorded on the CD-DA into the buffer memory 27 is set to be equal to that of reading out the data from the buffer memory 27, the speed of writing the MP3 data into the buffer memory 27 in the reproduction of the MP3 data is higher than that of reading out the data from the buffer memory 27. At a certain point of time, therefore, the recorded amount of the buffer memory 27 reaches the limit.

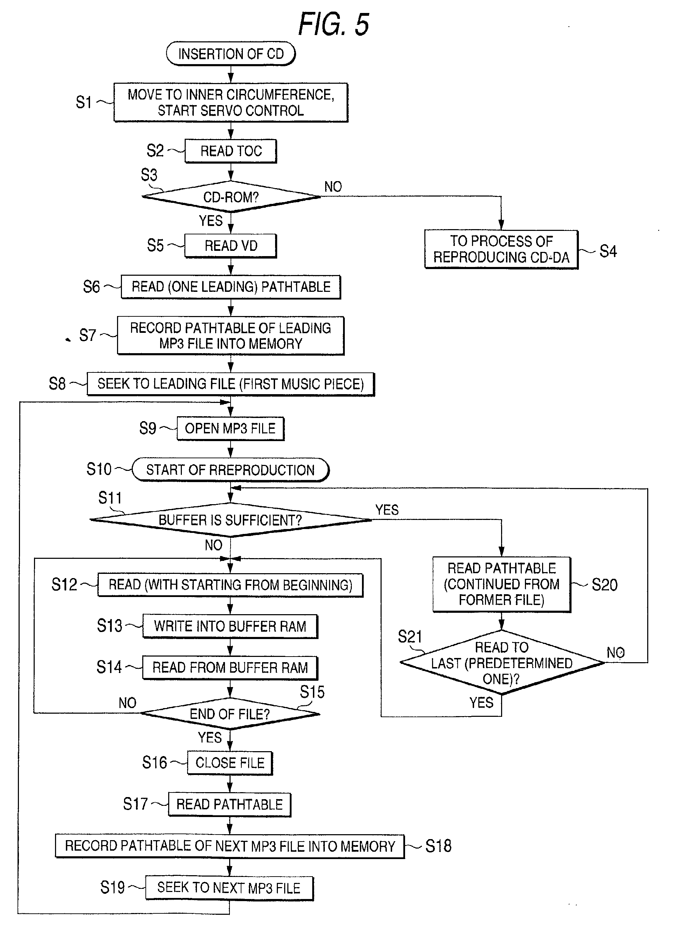

Next, the process of reproducing MP3 data in the embodiment will be described with reference to a flowchart shown in Fig. 5.

First, a recording medium such as a CD is inserted and loaded at a predetermined reproduction position. Then, the servo circuit 21 is controlled to drive the carriage motor 17B so that the reading beam of the pickup 16 is positioned on the innermost circumference of the recording medium, and the spindle servo control is started to rotate the recording medium at the constant linear velocity (step S1).

Next, the TOC information recorded in the innermost circumference is read out (step S2), and it is judged whether the loaded recording medium is a CD-ROM or not (step S3). If it is judged that the medium is a CD-DA, the above-mentioned process of reproducing musical data recorded on the CD-DA is performed (step S4).

If it is judged in step S3 that the medium is a CD-ROM, the servo circuit 21 is controlled so that the reading beam of the pickup 16 is positioned into the VD 5A to read the data of the PVD. Then, the CD-ROM 1 is recognized to have the disk structure according to the ISO 9660 standard (step S5).

After the loaded CD-ROM 1 is recognized to have the disk structure according to the ISO 9660 standard, the reading beam of the pickup 16 is positioned on the path table 5B to search for the path data of MP3 files. Then, the first path data in which the extension ".mp3" is attached to the file name is extracted (step S6).

This will be described with reference to Fig. 2. The search for path data of MP3 files is conducted by sequentially referring the data with starting from NO. 1. Then, it is noted that the file name "First.Love.mp3" at NO. 4 is the first path data to which the extension ".mp3" is attached. The path data are supplied to the RF amplifier 25, subjected to the above-mentioned signal processing in the signal processor 26 and the CD-ROM decoder 28, and then recorded into the built-in memory 23 of the microcomputer 24 (step S7).

In succession with the above, on the basis of the read out first path data, the servo circuit 21 is controlled so as to position the reading beam of the pickup 16 at the starting position of recording of the MP3 file recorded in the file region 5C (step S8). Thereafter, the MP3 file is opened (step S9), and the reproducing process is started (step S10).

At this time, the microcomputer 24 judges whether the recorded amount of the buffer memory 27 reaches the limit or not (step S11). If the amount does not reach the limit, or when MP3 data are not in the buffer memory 27, the microcomputer controls the CD-ROM decoder 28 so as to stop the operation of reading the MP3 data from the buffer memory 27, and controls the servo circuit 21 so as to read out the MP3 data of the MP3 file which is opened in step S9 (step S12).

The read out MP3 data are supplied to the RF amplifier 25 to be converted into an RF signal. The RF signal is sent to the signal processor 26 to be subjected to signal processing such as error correction. The resulting MP3 data are written into the buffer memory 27 under the control of the microcomputer 24 (step S13).

Furthermore, the microcomputer 24 controls the CD-ROM decoder 28 so as to read out the written MP3 data from the buffer memory 27, and supplies the MP3 data to the MP3 decoder 29. The data are then subjected to the expanding process in the MP3 decoder 29, and the expanded data are analog-converted in the D/A converter 30, and then output from the loudspeaker 13 (step S14).

Next, it is judged whether the first MP3 data are read out by the reading beam of the pickup 16 to their end or not (step S15). If the data are not read out to the end, the reading process is continued. If it is judged in step S15 that the MP3 data are read out to their end, the MP3 file is closed (step S16), and the servo circuit 21 is controlled so as to position the reading beam of the pickup 16 on the path table 5B. Then, the path data of the next MP3 file are searched.

Referring to Fig. 2, after No. 4, the file name to which the extension ".mp3" is attached is "Fan_mail.mp3" at NO. 5. Therefore, the pickup 16 reads out the path data of the file, and then supplies the path data to the RF amplifier 25. The path data are subjected to the above-mentioned signal processing in the signal processor 26 and the CD-ROM decoder 28, and then recorded into the built-in memory 23 of the microcomputer 24 (step S18).

On the basis of the read out next path data, the servo circuit 21 is controlled so as to position the reading beam of the pickup 16 at the starting position of recording of the next MP3 file recorded in the file region 5C (step S19).

The processes subsequent to step S9 are repeatedly conducted.

If it is judged in step S11 that the recorded amount of MP3 data in the buffer memory 27 reaches the limit, the CD-ROM decoder 28 is controlled so as to stop the operation of writing MP3 data into the buffer memory 27, and the servo circuit 21 is controlled so as to position the reading beam of the pickup 16 on the path table 5B. When the servo circuit 21 is to be controlled, the recording status of path data in the built-in memory 23 is checked to search for path data which is not yet recorded, and the pickup 16 reads out the data.

For example, it is assumed that the path data at NO. 5 in Fig. 2 are recorded in the built-in memory 23. The path data of the MP3 file to be next recorded are those at NO. 7, and hence the path data are read by the reading beam of the pickup 16. The path data are then supplied to the RF amplifier 25, and recorded into the built-in memory 23 via the signal processor 26 and the CD-ROM decoder 28 (step S20).

Thereafter, during a period when the recorded amount of the buffer memory 27 reaches the limit, recording is conducted on the built-in memory 23. During the period, reproduction of MP3 data is conducted while MP3 data recorded in the file region 5C are not read out and only the operation of reading out MP3 data recorded in the buffer memory 27 is conducted.

It is then judged whether all path data of MP3 files recorded in the path table 5B of the CD-ROM 1 are recorded into the built-in memory 23 or not (step S21). If it is judged that all path data of MP3 files are not recorded, the recorded amount of the buffer memory 27 is again checked.

During the period when it is judged that the recorded amount of the buffer memory 27 reaches the limit and the operation of writing MP3 data into the buffer memory 27 by the CD-ROM decoder 28 is stopped, the microcomputer 24 controls the CD-ROM decoder 28 so as to continue the operation of reading out MP3 data recorded in the buffer memory 27. Therefore, the recorded amount of the buffer memory 27 which has once reached the limit is gradually reduced also during the period when the writing operation by the CD-ROM decoder 28 is stopped.

When the microcomputer 24 judges that a free space is formed in the buffer memory 27, the microcomputer controls the CD-ROM decoder 28 so as to restart the operation of writing MP3 data, and the servo circuit 21 so as to position the reading beam of the pickup 16 at the starting position of recording of the MP3 file which is opened in step S9 and then restart the operation of reading MP3 data.

If it is judged in step S21 that all path data of MP3 files are recorded into the built-in memory 23, the CD-ROM decoder 28 is controlled so as to restart the operation of writing MP3 data, and the servo circuit 21 is controlled so as to position the reading beam of the pickup 16 at the starting position of recording of the MP3 file which is opened in step S9 and then restart the operation of reading MP3 data.

Thereafter, the reproducing process is controlled without positioning the reading beam of the pickup 16 on the path table 5B, and with reference to the path data recorded in the built-in memory 23 of the microcomputer 24.

As described above, in the reproducing apparatus 10 of the embodiment, the path data are recorded into the built-in memory 23 of the microcomputer 24 in accordance with the recorded amount of the buffer memory 27. Specifically, the path data of an MP3 file which are first detected as a result of searching on the path table 5B are recorded into the built-in memory 23, and the MP3 data corresponding to the path data are reproduced. When the recorded amount of the buffer memory 27 reaches the limit, i.e., during the period when the operation of writing into the buffer memory 27 by the CD-ROM decoder 28 is stopped, the remaining path data which is not yet recorded are recorded into the built-in memory 23. Therefore, the time period between loading of the CD-ROM 1 at the predetermined reproduction position and starting of reproduction of MP3 data can be shortened, and path data can be effectively recorded into the built-in memory 23, so that the seek velocity of the pickup 16 can be improved.

The invention is not restricted to the embodiment described above, and includes the following modifications in the range where the object of the invention is attained.

The embodiment described above is applied to MP3 data which are compressed by the MP3 system. It is a matter of course that the invention is not restricted to this and may be applies also to data which are compressed by another system.

The invention is not restricted to compressed data, and may be applied also to data which are not compressed, such as musical data recorded on a CD-DA. In this case, the servo circuit 21 causes the spindle motor 15A to rotate at a rotational speed which is higher (for example, twice) than a usual one, so that musical data are read out at a higher speed by the pickup 16. The situation where the buffer memory 27 is fully filled is produced. In the same manner as the above-mentioned embodiment, thereafter, the TOC information of the CD-DA is recorded into the built-in memory 23 when the buffer memory 27 is fully filled. According to the configuration, the time period between loading of the CD-DA at the predetermined reproduction position and starting of reproduction of the musical data can be shortened, and the TOC information can be effectively recorded into the built-in memory 23, so that the seek velocity of the pickup 16 can be improved.

In the embodiment described above, when the recorded amount of the buffer memory 27 reaches the limit, the remaining path data are read while stopping the writing into the buffer memory 27 is stopped. Alternatively, a predetermined amount which is not the limit recorded amount may be set, and, when the microcomputer 24 detects that the recorded amount exceeds the predetermined amount, the writing into the buffer memory 27 may be stopped.

In the above description, when a free space is formed in the buffer memory 27, the operation of writing into the buffer memory 27 is restarted. Alternatively, when the microcomputer 24 detects that the recorded amount is smaller than the above-mentioned predetermined amount, the writing operation may be restarted. In the alternative, in order to prevent the buffer memory 27 from entering an emptied state, it is preferable to set an amount which is relatively close to the full state, as the predetermined amount.

The invention is not restricted to the above-described embodiment and modifications, and may be variously applied without departing from the object of the invention.

According to the invention, data corresponding to management data which are first extracted are read out and then reproduced, and, when the recorded amount of a recorder into which the data are to be recorded reaches thereafter a predetermined amount, remaining management data are recorded into the recorder. Therefore, the time period between loading of a recording medium at the predetermined reproduction position and starting of reproduction of data recorded on the recording medium can be shortened, and the management data can be effectively recorded into the recorder, so that the seeking operation of a reader such as a searching operation can be improved.

## Claims

1. An apparatus for reproducing a recording medium comprising:
a reader which reads out data recorded on a recording medium, and management data indicating starting positions of recording of the data on said recording medium;
a data recorder in which the data that are read out by said reader are recorded;
a management data recorder in which the management data that are read out by said reader are recorded;
a data amount detector which detects that a recorded amount of said data recorder reaches a predetermined amount; and
a controller which, when the recorded amount reaches the predetermined amount, stops recording of data into said data recorder, and records remaining management data on said recording medium that are not recorded in said management data recorder, into said management data recorder, wherein
when the data recorded on said recording medium are to be reproduced, the management data of a minimum required amount are read out and recorded in said management data recorder, and, on the basis of the recorded management data, the data recorded on said recording medium are read out and recorded in said data recorder, and the data recorded in said data recorder are read out and reproduced.

2. The apparatus for reproducing a recording medium according to claim 1, wherein
when the recorded amount in said data recorder becomes equal to or smaller than the predetermined amount after stopping of recording of data into said data recorder, said controller restarts recording of data into said data recorder.

3. The apparatus for reproducing a recording medium according to claim 1, wherein
remaining management data is recorded into said management data recorder during reproducing of the data recorded in said data recorder.

4. The apparatus for reproducing a recording medium according to claim 1, wherein
the data are data which are compressed by a predetermined system, and
the data recorded in said data recorder are reproduced with being subjected to a predetermined expanding process.

5. The apparatus for reproducing a recording medium according to claim 1, wherein
said controller records predetermined management data which is first read by said reader, into said management data recorder, causes said reader to continuously read out data corresponding to the management data, and said data recorder to record the data, and performs a process of reproducing the data.

6. A method of reproducing a recording medium in which data recorded on a recording medium, and management data indicating starting positions of recording of the data on said recording medium are recorded in a recorder, and reproducing the recorded data,
said method comprising the steps of:
reading out the management data of a minimum required amount, when the data recorded on said recording medium are to be reproduced;
recording the read out management data;
reading out the data recorded on said recording medium on the basis of the recorded management data;
recording the read out data, and performing a process of reproducing the recorded data;
detecting that a recorded amount of said data recorder reaches a predetermined amount; and
when the recorded amount reaches the predetermined amount, stopping recording of data, and recording remaining management data on said recording medium that are not recorded.

7. The program for reproducing a recording medium to cause a computer to perform a method of reproducing a recording medium according to claim 6.
